# EUROPÄISCHE PATENTSCHRIFT

(11) **EP 3 134 452 B1**
(45) Veröffentlichungstag und Bekanntmachung des Hinweises auf die Patenterteilung: **09.05.2018**
(21) Anmeldenummer: 15707989.8
(22) Anmeldetag: 06.03.2015
(51) Int. Cl.: C08G 18/62, C08G 18/10, C08G 18/12, C08G 18/40, C08G 18/42, C08G 18/44

(54) **WÄSSRIGE ZWEIKOMPONENTEN-BESCHICHTUNGSZUSAMMENSETZUNGEN UND DARAUS HERGESTELLTE BESCHICHTUNGEN MIT HOHER EROSIONSBESTÄNDIGKEIT**
AQUEOUS TWO COMPONENT COATING COMPOSITIONS AND COATINGS PRODUCED FROM THE SAME HAVING HIGH EROSION RESISTANCE
COMPOSITIONS DE REVÊTEMENT BICOMPOSANT SUR BASE AQUEUSE ET REVÊTEMENTS AINSI FABRIQUÉS AYANT UNE RÉSISTANCE ÉLEVÉE À L'ÉROSION

(30) Priorität: 24.04.2014 EP 14165726
(43) Veröffentlichungstag der Anmeldung: 01.03.2017
(73) Patentinhaber: Akzo Nobel Coatings International B.V., 6824 BM Arnhem (NL)
(72) Erfinder: MÜNCH, Jürgen, 26123 Oldenburg (DE)
(74) Vertreter: Akzo Nobel IP Department
(86) Internationale Anmeldenummer: PCT/EP2015/054722
(87) Internationale Veröffentlichungsnummer: WO 2015/161952

(56) Entgegenhaltungen:
- US-A1- 2013 210 997

## Beschreibung

Die vorliegende Erfindung betrifft wässrige Zweikomponenten-Beschichtungszusammensetzungen sowie daraus hergestellte Beschichtungen. Die vorliegende Erfindung betrifft auch ein Verfahren zur Herstellung dieser Beschichtungen sowie die Verwendung der Beschichtungszusammensetzung zur Herstellung von Beschichtungen. Nicht zuletzt betrifft die vorliegende Erfindung die Verwendung der wässrigen Beschichtungszusammensetzungen zur Verbesserung der Erosionsbeständigkeit.

### Stand der Technik

In verschiedenen Einsatzbereichen besteht ein Bedarf an Beschichtungen, die hohen mechanischen Ansprüchen genügen. Beispielhaft zu nennen sind hier Oberflächen von Objekten, die hinsichtlich der Umgebungsbedingungen hohen Geschwindigkeiten bei gleichzeitiger Belastung durch erodierende Stoffe, beispielsweise Feststoffe oder Flüssigkeiten, ausgesetzt sind. Eine erodierende Belastung erfahren also grundsätzlich Objekte, die einerseits selbst bewegt werden, und andererseits dem Einfluss erodierende Stoffe ausgesetzt sind. Insbesondere zu nennen sind Rotorblätter von Windenergieanlagen oder Hubschraubern und Schiffsschrauben, Luft- und Landfahrzeuge (wie beispielsweise Flugzeuge, Schienenfahrzeuge, Automobile) und Schiffe.

Grundsätzlich können Erosionen hervorgerufen werden durch flüssige oder feste Stoffe, die selbst oder dispers beziehungsweise gelöst in einem anderen gasförmigen oder flüssigen Medium (beispielsweise Luft oder Wasser) vorliegen und durch dieses Medium bewegt werden (beispielsweise Flugsand, Regen und/oder Hagel). Beim Auftreffen auf Objekte beziehungsweise deren Oberflächen wird auf diese eine erodierende Kraft ausgeübt. Beispiele dafür sind die Erosion durch Regen oder Flugsand an Rotorblättern oder im Bereich der Vorflügel von Flugzeugen. Besonders stark sind die erodierenden Einflüsse im Bereich von Kanten der entsprechenden Objekte.

Generell besteht die Möglichkeit, den Verschleißschutz, das heißt insbesondere die Erosionsbeständigkeit, von Objekten durch Beschichtungen der Oberflächen der Objekte zu steuern. Eine Möglichkeit, die Erosionsbeständigkeit zu erhöhen, ist die Erhöhung der Schichtdicken von Beschichtungen. Dies ist aus Gewichtsgründen jedoch in vielen Anwendungen, beispielsweise im Flugzeugbau oder Rotorblattbau von Windenergieanlagen, nicht erstrebenswert.

Es wird demnach versucht, Beschichtungszusammensetzungen dahingehend technologisch zu optimieren, dass auch bei nicht zu hohen Schichtdicken eine angemessene Erosionsbeständigkeit erreicht wird. Um eine gute Erosionsbeständigkeit zu erhalten, ist bekanntermaßen ein genau abgestimmtes Verhältnis von Flexibilität beziehungsweise Elastizität der Beschichtung einerseits und andererseits der Härte der Beschichtung wichtig. Bekanntermaßen ist ein ausgeprägtes zähelastisches Verhalten von Beschichtungen für eine hohe Erosionsbeständigkeit sehr wichtig. Ein zentraler Aspekt der Forschung auf diesem technischen Gebiet liegt in der Auffindung spezieller Komponenten und Komponentenkombinationen in Beschichtungszusammensetzungen, die dazu führen, dass die resultierenden Beschichtungen die gewünschte Erosionsbeständigkeit aufweisen.

Im Hinblick auf die immer weiter wachsenden Anforderungen an das ökologische Profil von Beschichtungszusammensetzungen ist es zudem wünschenswert, dass diese Zusammensetzungen einen möglichst geringen Anteil an organischen Lösemitteln enthalten.

Aus der internationalen Patentanmeldung WO 2010/122157 sind erosionsbeständige Polyurethanbeschichtungen bekannt, die unter Einsatz von Beschichtungszusammensetzungen hergestellt werden, die aliphatische Polyesterpolyole wie Polycarbonatdiole und eine Isocyanatkomponente, beispielsweise ein Polylacton-modifiziertes Isocyanat-Präpolymer oder Uretdionverbindungen, enthalten. Die Zusammensetzungen können organische Lösemittel enthalten, wobei der Gehalt dieser Lösemittel jedoch gezielt vergleichsweise niedrig eingestellt werden soll.

In der WO 2012/032113 A1 werden Zwei-Komponenten-Erosionsschutzbeschichtungszusammensetzungen auf Basis einer Polyolkomponente und einer mit Isocyanatgruppen terminierten Polylacton-Komponente offenbart, die zur Herstellung von Beschichtungen auf Rotorblättern eingesetzt werden können. Auch diese Zusammensetzungen enthalten bevorzugt nur sehr niedrige Mengen von organischen Lösemitteln.

Ein Nachteil solcher sehr lösemittelarmen Systeme ist deren vergleichsweise limitierte Kompatibilität mit Pigmenten, Füllstoffen und/oder Additiven. Zwar können die Systeme mit annehmbar niedriger Viskosität formuliert werden, das heißt einer Viskosität, die eine Applikation auf ein Substrat zulässt, jedoch muss bei der Formulierung genau beachtet werden, dass keine ungewünschten Viskositätserhöhungen und/oder Entmischungsprozesse, insbesondere bei Lagerung, auftreten. Beispielsweise kann der Zusatz von an sich typischen Mattierungsmitteln wie Mattierungsmitteln auf Kieselsäure- oder Silikat-Basis oder auch wachsartigen Typen von Mattierungsmitteln zu unerwünschten Effekten führen, da die Systeme in dieser Hinsicht sehr sensibel sind. Gerade solche Mattierungsmittel sind allerdings im Rahmen der Beschichtung von Windenergieanlagen, insbesondere im Offshore-Bereich, sehr wichtig. Denn ohne solche Mattierungsmittel erfüllen die Beschichtungen in der Regel nicht die gesetzlichen Vorgaben an den Mattierungsgrad. Dieser ist deshalb sehr wichtig, als stark glänzende und reflektierende Oberflächen immense Störfaktoren insbesondere für den Luftfahrtbetrieb darstellen.

Aktuelle Herausforderungen beispielsweise im Rotorblattbau von Windenergieanlagen, insbesondere bezüglich windreicher Standorte (Offshore), sowie im Flugzeugbau (Gewichtsverringerung bei gleicher oder besserer Performance) liegen also in der Bereitstellung von Beschichtungszusammensetzungen, die die oben genannten Vorteile vereinen und die beschriebenen Nachteile ausräumen. Die Zusammensetzungen sollen zum einen zu Beschichtungen führen, die eine hohe Erosionsbeständigkeit aufweisen. Zum anderen aber ist es ebenso wichtig, dass die Beschichtungszusammensetzungen ein gutes ökologisches Profil aufweisen, um den in dieser Hinsicht immer weiter wachsenden Anforderungen gerecht zu werden. Ein hierbei einschlägiger Richtwert ist beispielsweise der VOC ("volatile organic content" - Anteil flüchtiger organischer Komponenten). Ein VOC von kleiner als 250 g/l Beschichtungszusammensetzung gilt heute als anzustrebender Wert. Gleichzeitig aber sollten die Beschichtungszusammensetzungen eine hervorragende Formulierungsfreiheit aufweisen. Das heißt, die Zusammensetzungen sollte nicht zu sensibel auf die Additivierung reagieren, wie dies in der Regel bei lösemittelarmen oder sogar lösemittelfreien Zusammensetzungen der Fall ist.

### Aufgabe

Der vorliegenden Erfindung lag daher die Aufgabe zugrunde, die zuvor beschriebenen Nachteile des Standes der Technik zu beseitigen. Es sollten Beschichtungszusammensetzungen zur Verfügung gestellt werden, die zur Herstellung von Erosionsschutzbeschichtungen eingesetzt werden können, die eine hervorragende Erosionsbeständigkeit aufweisen. Gleichzeitig sollten die Beschichtungszusammensetzungen ein gutes ökologisches Profil aufweisen und trotzdem eine annehmbare Formulierungsfreiheit aufweisen.

### Lösung

Demgemäß wurde eine wässrige Zweikomponenten-Beschichtungszusammensetzung gefunden, umfassend
(1) eine wässrige Stammlackkomponente umfassend
   (A) mindestens eine wässrige Dispersion mindestens eines polymeren Harzes und
   (B) mindestens ein Polycarbonatdiol
   sowie
(2) eine Härterkomponente umfassend
   (C) mindestens einen Polyisocyanat-modifizierten Polyester mit einem Isocyanatgehalt von 4 bis 15 %.

Die neue wässrige Zweikomponenten-Beschichtungszusammensetzung ist Gegenstand der vorliegenden Erfindung und wird in der Folge auch als erfindungsgemäße Beschichtungszusammensetzung bezeichnet. Bevorzugte Ausführungsformen gehen aus der folgenden Beschreibung und den Unteransprüchen hervor.

Gegenstand der vorliegenden Erfindung ist auch ein Verfahren zur Herstellung von Beschichtungen unter Einsatz der erfindungsgemäßen Beschichtungszusammensetzung sowie eine Beschichtung, die aus der Beschichtungszusammensetzung hergestellt wurde. Gegenstand der Erfindung ist auch die Verwendung der Beschichtungszusammensetzung zur Verbesserung der Erosionsbeständigkeit.

Es gelang die Bereitstellung einer wässrigen Beschichtungszusammensetzung, das heißt einer Zusammensetzung mit wässrigem Charakter, die als Lösemittel vornehmlich Wasser enthält. Obwohl eine solche Beschichtungszusammensetzung damit einen völlig anderen Charakter hat, als die oben beschriebenen lösemittelfreien Zusammensetzungen, werden Beschichtungen erhalten, die eine ausgezeichnete Erosionsbeständigkeit aufweisen. Die Kombination eines Polycarbonatdiols (B) und der speziellen Polyisocyanatgruppen enthaltende Komponente (C) in einer wässrigen Zusammensetzung vereint eine gute Erosionsbeständigkeit mit einem guten ökologischen Profil. Die Beschichtungszusammensetzung beziehungsweise die Beschichtungen eignen sich somit ideal für Substrate, die starken erodierende Einflüssen ausgesetzt sind, beispielsweise Rotorblättern von Windkraftanlagen oder Substraten im Flugzeugbau.

### Beschreibung der Erfindung

Die erfindungsgemäße Beschichtungszusammensetzung ist eine Zweikomponenten-Beschichtungszusammensetzung. Dies bedeutet bekanntermaßen, dass im Rahmen der vorliegenden Erfindung die wie unten beschriebene Komponente (1) (Stammlackkomponente) und die wie unten beschriebene Komponente (2) (Härterkomponente) getrennt voneinander hergestellt und gelagert werden und erst kurz vor der Applikation zusammengegeben werden. Die Verarbeitungszeit beziehungsweise Topfzeit (das heißt die Zeit, in der die erfindungsgemäße Beschichtungszusammensetzung bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist bekanntermaßen abhängig von den eingesetzten Bestandteilen, beispielsweise den weiter unten beschriebenen Polycarbonatdiolen (B) und dem Polyisocyanat-modifizierten linearen Polyester (C). Insbesondere beträgt die Verarbeitungszeit der Beschichtungszusammensetzung aber mindestens 2 min bis zu 60 min, bevorzugt mindestens 5 min bis zu 60 min. Der Vorteil eines solchen Zweikomponenten-Beschichtungszusammensetzung liegt vor allem darin, dass auch bei großen Bauteilen wie Rotorblättern von Windenergieanlagen oder Flugzeugen eine einfache Verarbeitung möglich ist, insbesondere keine hohen Temperaturen zur Härtung notwendig sind. Bevorzugt wird das erfindungsgemäße Beschichtungsmittel nach dem Aufbringen auf ein Substrat bei weniger als 80°C, insbesondere bevorzugt weniger als 60°C gehärtet.

Unter Härtung ist das dem Fachmann bekannte Vorgehen zu verstehen, das heißt die Überführung einer als Schicht auf ein Substrat aufgebrachten Beschichtungszusammensetzung in den gebrauchsfertigen Zustand, das heißt also in einen Zustand, in der das mit der jeweiligen Beschichtung ausgestattete Substrat transportiert, gelagert und bestimmungsgemäß verwendet werden kann. Diese Härtung erfolgt insbesondere durch chemische Reaktion von reaktiven funktionellen Gruppen der enthaltenen Komponenten, die als Bindemittelbestandteile in dem Beschichtungsmittel enthalten sind. Insbesondere zu nennen ist damit im Rahmen der vorliegenden Erfindung die Reaktion der Hydroxylgruppen des Polycarbonats und gegebenenfalls weiterer als Bindemittel in der Stammlackkomponente enthaltener hydroxyfunktioneller polymerer Harze, insbesondere Harze in der mindestens einen wässrigen Dispersion (A), mit den Isocyanatgruppen des Polyisocyanat-modifizierten Polyesters (C). Durch diese Vernetzungsreaktionen und die parallel erfolgende Evaporation von gegebenenfalls vorhandenen organischen Lösemitteln und/oder Wasser wird ein Beschichtungsfilm gebildet, das heißt es wird eine gehärtete Beschichtungsschicht (gehärtete Beschichtung) hergestellt. Die Aktivierung der Reaktionen ist durch thermische Energie möglich, wobei im vorliegenden Fall aber der beschriebene Vorteil der nicht notwendigen hohen Temperaturen besteht.

Unter dem Begriff Bindemittel beziehungsweise Bindemittelbestandteil wird hierin entsprechend der einschlägigen DIN EN ISO 4618 der nichtflüchtige Anteil eines Beschichtungsstoffs ohne Pigmente und Füllstoffe verstanden. Spezielle Bindemittelbestandteile sind in diesem Sinne somit neben den Harzen in der Dispersion (A) und der Komponente (B) auch die Komponente (C) (die auch als Härter oder Vernetzungsmittel bezeichnet werden kann) oder auch weitere lacktypische polymere Harze und/oder Additive, das heißt alle weiteren nichtflüchtigen Bestandteile, außer den Pigmenten und Füllstoffen. Schon der Übersichtlichkeit halber wird der Begriff Bindemittel aber hauptsächlich in Bezug auf die vornehmlich für die Filmbildung verantwortlichen Komponenten der Stammlackkomponente (1) verwendet, das heißt beispielsweise die Komponenten (A) und (B). Die Komponente (C) wird entsprechend vornehmlich als Härter oder auch Vernetzungsmittel bezeichnet.

Die Zweikomponenten-Beschichtungszusammensetzung enthält, und zwar in der Stammlackkomponente (1), mindestens eine wässrige Dispersion (A) mindestens eines polymeren Harzes. Dies bedeutet also, dass die wässrige Dispersion als solche als Komponente für die Herstellung der Beschichtungszusammensetzung eingesetzt wird. Bevorzugte wässrige Dispersionen enthalten genau ein polymeres Harz.

Wässrige Dispersionen von polymeren Harzen, auch genannt wässrige Polymerdispersionen, sind bekannt. Es handelt sich also um disperse Systeme, in denen Wasser als kontinuierliche Phase (Dispersionsmittel) und das polymere Harz als in der kontinuierlichen dispergierte Phase (disperse Phase) vorhanden ist. Bekanntermaßen müssen die polymeren Harze bestimmte, für den Fachmann auf ihm geläufige Weise ermittelbare physikochemische Eigenschaften aufweisen, um eine solche wässrige Dispersion bilden zu können, das heißt um in der hydrophilen kontinuierlichen Phase stabilisiert werden zu können und nicht als unlösliche Agglomerate auszufällen.

Zur hydrophilen Stabilisierung beziehungsweise zur Generierung der Dispergierbarkeit in wässrigem Medium kann ein polymeres Harz beispielsweise bestimmte ionische Gruppen und/oder Gruppen, die in ionische Gruppen überführt werden können (potentiell ionische Gruppen), enthalten. Solche Harze werden im Rahmen der vorliegenden Erfindung als ionisch hydrophil stabilisierte Harze bezeichnet. Ebenfalls enthalten sein können nicht ionische hydrophil modifizierende Gruppen. Bevorzugt sind aber im Rahmen der vorliegenden Erfindung die ionisch hydrophil stabilisierten Harze.

Genauer handelt es sich bei den modifizierenden Gruppen beispielsweise entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   oder
- nicht ionische hydrophile Gruppen (nicht-ionische Modifizierung)
   oder
- Kombinationen der zuvor genannten Gruppen.

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Als typische Neutralisationsmittel zum Erhalt kationischer Gruppen sind Säuren wie Ameisen-, Essig- und Milchsäure zu nennen. Als typische Neutralisationsmittel zum Erhalt anionischer Gruppen sind beispielsweise flüchtige Basen wie Ammoniak oder Amine wie gegebenenfalls Hydroxylgruppen aufweisende Amine mit 1 bis 12 Kohlenstoffatomen, beispielsweise Triethanolamin und Dimethylethanolamin, zu nennen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die ionischen oder potentiell ionischen Gruppen enthalten, in das Harz eingeführt werden. Die nicht-ionischen Modifizierungen werden beispielsweise durch den Einbau von Poly(ethylen)oxid-Polymeren als laterale oder endständige Gruppen der Harzmoleküle eingeführt.

Selbstverständlich unterstützen auch weitere polare funktionelle Gruppen, beispielsweise Hydroxylgruppen, in dem Harz dessen Wasserdispergierbarkeit. Solche funktionellen Gruppen werden in der Regel ebenfalls über entsprechende Monomere, die diese Gruppen enthalten, in die Harze eingeführt.

Bekanntermaßen ist es ebenfalls möglich, die Stabilisierung von polymeren Harzen in wässriger Dispersion durch die Zugabe von Dispergiermitteln, das heißt typischen grenzflächenaktiven Additiven (auch als Tenside, Schutzkolloide, Emulgatoren bezeichnet) zu erreichen oder zu verbessern. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff. Auch die anteilige Zugabe organischer Lösemittel ist möglich.

Wässrige Dispersionen von polymeren Harzen können als Primärdispersionen vorliegen, das heißt die Harze werden direkt in der wässrigen Phase hergestellt. Einschlägige Verfahren sind die Emulsionspolymerisation oder auch die Suspensionspolymerisation. Ebenfalls möglich sind Sekundärdispersionen. Das heißt das polymere Harz wird in mindestens einem organischen Lösemittel hergestellt und dann durch kontinuierliche Wasserzugabe und gleichzeitiges oder anschließendes Entfernen der organischen Lösemittel (Temperaturerhöhung und/oder Druckreduktion) in die wässrige Phase überführt.

Die obigen Ausführungen gelten nur als ergänzende grundsätzliche Erläuterung. Wie genau eine wässrige Dispersion im Einzelfall herzustellen ist und welche polymeren Harze hierfür in Frage kommen, weiß der Fachmann beziehungsweise kann er durch wenige zielgerichtete Versuche herausfinden.

Als polymere Harze in der mindestens einen wässrigen Dispersion können an sich alle in dieser Hinsicht bekannten Harze zum Einsatz kommen, solange mit ihnen auf oben beschriebene und an sich bekannte Weise eine wässrige Dispersion hergestellt werden kann. Das heißt es können entsprechende (Co)Polymerisate von ethylenisch ungesättigten Monomeren, oder Polyadditionsharze und/oder Polykondensationsharze eingesetzt werden. Beispielhaft seien Polyacrylat-, Polyester-, Alkyd-, Polyurethan-, Polylacton-, Polycarbonat-, Polyether-, Epoxidharze sowie Mischpolymerisate der genannten Harze, beispielsweise Polyester-Polyurethanharze oder Polyester-Polyacrylatharze genannt.

Bevorzugt ist, dass die erfindungsgemäße Beschichtungszusammensetzung mindestens eine wässrige Dispersion umfasst, die ein hydroxyfunktionelles polymeres Harz umfasst. Ganz besonders bevorzugt ist es, dass sie mindestens eine wässrige Dispersion umfasst, welche ein hydroxy- und carboxyfunktionelles Harz umfasst. Bekanntermaßen lassen sich gerade mit solchen Harzen sehr gut wässrige Dispersionen herstellen, denn sie weisen durch die genannten Gruppen ein ausgewogenes Polaritätsprofil auf, das die Überführung in eine wässrige Dispersion, gegebenenfalls mit Unterstützung der genannten Hilfsmittel wie Neutralisationsmitteln und/oder Emulgatoren, ermöglicht.

Die genannten hydroxyfunktionellen Harze besitzen bevorzugt eine OH-Zahl von 60 bis 250 mg KOH/g, nochmals bevorzugt 80 bis 200 mg KOH/g und insbesondere 90 bis 180 mg KOH/g. Die OH-Zahl wird im Rahmen der vorliegenden Erfindung gemäß DIN 53240 gemessen. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Bevorzugt wird mindestens eine wässrige Dispersion (A) eingesetzt, die mindestens ein carboxyfunktionelles polymeres Harz umfasst. Insbesondere bevorzugt haben die genannten Harze eine Säurezahl von 5 bis 50 mg KOH/g, bevorzugt 5 bis 25 mg KOH/g. Die Säurezahl wird im Rahmen der vorliegenden Erfindung gemäß DIN EN ISO 3682 gemessen.

Bevorzugt umfasst die erfindungsgemäße Beschichtungszusammensetzung mindestens eine wässrige Dispersion (A), die als polymeres Harz ein Polyacrylatharz enthält. Unter Polyacrylatharzen oder auch Poly(meth)acrylatharzen werden bekanntermaßen polymere organische Verbindungen verstanden, die unterschiedliche Acrylat- und/oder Methacrylatmonomere enthalten, das heißt solche Monomere in ihrer reagierten Form enthalten. Die Bezeichnung (Meth)acrylat steht im Rahmen der vorliegenden Erfindung für Acrylate und/oder Methacrylate beziehungsweise solche Verbindungen, die Acrylate und/oder Methacrylate beinhalten beziehungsweise aus diesem aufgebaut sind. Als Beispiele für solche Acrylat- und Methacrylatmonomere sind unterschiedliche Alkyl(meth)acrylate und Cycloalkyl(meth)acrylate zu nennen, wie beispielsweise die dem Fachmann bekannten Verbindungen Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate wie Cyclopentylacrylat, Cyclopentylmethacrylat, Isobornylacrylat, Isobornylmethacrylat, Cyclohexylacrylat und Cyclohexylmethacrylat.

Wie oben genannt, sind die polymeren Harze, insbesondere also die Polyacrylatharze, bevorzugt hydroxyfunktionell. Dementsprechend sind in das Polymergerüst bevorzugt bestimmte Anteile solcher Acrylat- und Methacrylatmonomere eingebaut, die OH-Gruppen aufweisen und damit die OH-Funktionalität der Polyacrylatharze ausmachen. Als hydroxylgruppenhaltige Monomerbausteine zur Herstellung der Polyacrylatharze werden Hydroxyalkyl(meth)acrylate, wie beispielsweise 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine für die Polyacrylatharze können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie insbesondere Acryl- und/oder Methacrylsäure eingesetzt werden. Letztere Monomere können dabei insbesondere der Einführung von Carbonsäuregruppen und damit der Erhöhung der Säurezahl dienen, das heißt letztlich auch der wie oben beschriebenen Wasserdispergierbarkeit dienen.
Die Herstellung solcher Polyacrylatharze kann auf an sich bekannte Weise erfolgen, beispielsweise mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von beispielsweise 50 bis 200 °C.

Die mindestens eine Dispersion (A) des mindestens einen polymeren Harzes ist wässrig. Der Ausdruck "wässrig" ist dem Fachmann in diesem Zusammenhang bekannt. Gemeint ist grundsätzlich ein System, das als Lösemittel nicht ausschließlich organische Lösemittel enthält, sondern das im Gegenteil als Lösemittel einen signifikanten Anteil Wasser enthält.

Bevorzugt ist "wässrig" im Rahmen der vorliegenden Erfindung so zu verstehen, dass das jeweilige System mindestens 10 Gew.-% Wasser, bevorzugt mindestens 15 Gew.-%, besonders bevorzugt mindestens 20 Gew.-% Wasser, bezogen auf das Gesamtgewicht des Systems, enthält. Besonders bevorzugt ist wässrig so zu verstehen, dass neben der genannten Anforderung "mindestens 10 Gew.-% (beziehungsweise mindestens 15 oder 20 Gew.-%) Wasser, bezogen auf das Gesamtgewicht des Systems", die folgende Voraussetzung erfüllt ist. Danach beträgt zudem der Anteil von Wasser, bezogen auf die Gesamtmenge der in dem System enthaltenen Lösemittel (das heißt Wasser und organische Lösemittel), mindestens 55 Gew.-%, bevorzugt mindestens 60 Gew.-%, insbesondere bevorzugt mindestens 65 Gew.-%. Bevorzugt ist des Weiteren, dass der Anteil von organischen Lösemittel in dem System kleiner als 20 Gew.-%, bevorzugt kleiner 15 Gew.-%, jeweils bezogen auf die Gesamtmenge des Systems, ist. Als System im oben genannten Sinne gelten beispielsweise die wässrige Dispersion (A), die Stammlackkomponente (1) oder auch die erfindungsgemäße Beschichtungszusammensetzung.

Ganz besonders bevorzugt gilt für die mindestens eine wässrige Dispersion (A), dass sie, bezogen auf ihr Gesamtgewicht, mindestens 35 Gew.-% Wasser enthält, dass der Anteil Wasser, bezogen auf die Gesamtmenge der in der Dispersion enthaltenen Lösemittel (das heißt Wasser und organische Lösemittel), mindestens 70 Gew.-% beträgt und der Anteil organischer Lösemittel, bezogen auf ihr Gesamtgewicht, kleiner 15 Gew.-% beträgt. Die Dispersion (A) enthält also ganz besonders bevorzugt einen besonders hohen Anteil Wasser.

Der Festkörper der mindestens einen Dispersion (A) liegt bevorzugt zwischen 15 und 80 %, insbesondere 20 bis 70 %, ganz besonders bevorzugt zwischen 30 bis 50 %. Die mindestens eine Dispersion (A) wird in dieser Form in der erfindungsgemäßen Beschichtungszusammensetzung eingesetzt.

Im Rahmen der vorliegenden Erfindung werden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird nach DIN EN ISO 3251 eine Menge von 1 g des jeweiligen Bestandteils, beispielsweise einer Dispersion eines polymeren Harzes in entsprechenden Lösemitteln, für 1 h bei 125°C erhitzt, auf 20°C abgekühlt und dann der Restgehalt gewogen.

Der Anteil der mindestens einen Dispersion (A), bezogen auf das Gesamtgewicht der erfindungsgemäßen Beschichtungszusammensetzung kann breit variieren und ist beispielsweise davon abhängig, wie hoch der Festkörper der Dispersion ist. Eine Einflussgröße stellt auch dar, ob die Stammlackkomponente neben den polymeren Harzen, die durch die eine oder die mehreren wässrigen Dispersionen (A) von polymeren Harzen in die Zusammensetzung gelangen, sowie neben dem mindestens einen Polycarbonatdiol, noch weitere polymere Harze enthält, die als Bindemittelbestandteile in der Zusammensetzung enthalten sind und somit zur Filmbildung bei der Härtung beitragen.

Bevorzugt ist, dass die Beschichtungszusammensetzung, bezogen auf ihr Gesamtgewicht, zwischen 10 und 30 Gew.-%, bevorzugt 12 bis 25 Gew.-%, insbesondere 15 bis 20 Gew.-% an polymeren Harzen, bevorzugt Polyacrylatharze, enthält, die aus wässrigen Dispersionen (A) stammen. Je nach Wahl des Festkörpers der wässrigen Dispersionen ist somit auch der Anteil dieser Dispersionen (A) variabel. Bevorzugt beträgt der Anteil von wässrigen Dispersionen (A) zwischen 25 und 65 Gew.-%, bevorzugt 30 und 60 Gew.-%. Dabei kann genau eine wässrige Dispersion (A) eingesetzt werden. Oder aber es werden beispielsweise zwei unterschiedliche wässrige Dispersionen eingesetzt, welche zwei unterschiedliche polymere Harze enthalten. Die Gesamtmenge der Dispersionen (A) und der darin enthaltenen polymeren Harze liegen bevorzugt dann wiederum innerhalb der oben genannten Bereiche.

Die Zweikomponenten-Beschichtungszusammensetzung enthält, und zwar in der Stammlackkomponente (1), mindestens ein Polycarbonatdiol (B).

Polycarbonatdiole sind formal betrachtet Veresterungsprodukte, die durch Umsetzung von Kohlensäure mit Polyolen entstehen können. In der Praxis werden die Carbonatstrukturen bekanntermaßen mit Hilfe von Phosgen oder Kohlensäurediestern unter gängigen Reaktionsbedingungen eingeführt. Die Umsetzung mit Diolen, beispielsweise mit 3-Methyl-1,5-pentandiol, 1,6-Hexandiol und/oder 1,5-Pentandiol führt dann zu den Polycarbonatdiolen. Selbstverständlich können solche Polycarbonatdiole neben den die Ausgangskomponenten verbindenden Carbonatfunktionen anteilig auch weitere funktionelle Gruppen wie Ester- oder Ethergruppen enthalten, je nach Art und Menge der eingesetzten Ausgangsverbindungen. Vorzugsweise handelt es sich bei dem Polycarbonatdiol um ein lineares Polycarbonatdiol. Bevorzugt sind die Hydroxylgruppen endständig, das heißt sie sind an beiden Kettenenden des bevorzugt linearen Polycarbonatdiols angeordnet (hydroxyl-terminiertes Polycarbonatdiol). Ganz besonders bevorzugt handelt es sich um ein aliphatisches, insbesondere aliphatisch-gesättigtes Polycarbonatdiol. Das Polycarbonatdiol enthält also bevorzugt keine aromatischen Gruppen, da diese eine deutlich eingeschränkte UV-Beständigkeit aufweisen.

Bevorzugt besitzen die Polycarbonatdiole (B), insbesondere die linearen, aliphatischen Polycarbonatdiole, eine OH-Zahl von 30 bis 500 mg KOH/g, bevorzugt 100 bis 400 mg KOH/g, insbesondere 150 bis 300 mg KOH/g.

Da es sich bei den Polycarbonaten (B) um diolische Komponenten handelt, sind die OH-Zahl und das zahlenmittlere Molekulargewicht der Komponenten voneinander abhängig beziehungsweise die angegebene OH-Zahl lässt Rückschlüsse auf das zahlenmittlere Molekulargewicht zu. Ein hohes zahlenmittleres Molekulargewicht würde mit einer eher niedrigen OH-Zahl einhergehen. Das zahlenmittlere Molekulargewicht kann breit variieren und liegt im Bereich von beispielsweise 220 g/mol bis 2250 g/mol (im Rahmen der vorliegenden Erfindung werden die mittleren (Zahlen- und Gewichtsmittel) Molekulargewichte mittels GPC-Analyse mit THF (+0,1% Essigsäure) als Eluent (1 ml/min) auf einer Styrol-Divinylbenzol-Säulenkombination, Kalibrierung mit Polystyrol-Standards, gemessen). Bevorzugt liegt das zahlenmittlere Molekulargewicht zwischen 375 und 750 g/mol.

Geeignete Polycarbonatdiole (B) werden beispielsweise unter der Produktlinie Desmophen® C von der Firma Bayer MaterialScience AG (Leverkusen, Deutschland) oder Eternacoll® PH (UBE) angeboten.

Der Anteil der Polycarbonate (B) liegt vorzugsweise im Bereich von 2 bis 20 Gew.-%, bevorzugt 3 bis 15 Gew.-%, besonders bevorzugt 4 bis 10 Gew.-%, jeweils bezogen auf das Gesamtgewicht der erfindungsgemäßen Beschichtungszusammensetzung.

Die Zweikomponenten-Beschichtungszusammensetzung enthält, und zwar in der Härterkomponente (2), mindestens einen Polyisocyanat-modifizierten Polyester (C) mit einem Isocyanatgehalt von 4 bis 15 %.

Polyester sind bekannt. Es handelt sich um polymere Harze, die durch Umsetzung mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Bevorzugt handelt es sich bei dem zu modifizierenden Polyester um ein Polylactonpolymer, das heißt also ein in der Regel durch ringöffnende Polymerisation von Lactonen wie insbesondere epsilon-Caprolacton hergestelltes Polymer. Dabei werden in der Regel als Starter beziehungsweise Katalysator organische Alkohole, meist Diole, eingesetzt. Das resultierende Polylactonpolymer besitzt dann im Falle des Einsatzes von Diolen zwei endständige Hydroxylgruppen. Jedenfalls aber besitzt das Polymer eine Hydroxylgruppe, die durch die letzte Ringöffnung entsteht. Solche Polyester sind also linear-aliphatische und gesättigte Polyester mit mindestens einer Hydroxylgruppe. Geeignete Lactone zur Herstellung des Polylactonpolymers sind Oxiran-2-on, beta-Propiolacton, gamma-Butyrolacton, gamma-Valerolacton, epsilon-Caprolacton oder Methyl-epsilon-caprolacton, vorzugsweise gamma-Butyrolacton und epsilon-Caprolacton, besonders bevorzugt epsilon-Caprolacton. Geeignete Starteralkohole sind Neopentylglykol, Ethylenglykol oder Trimethylolpropan.

Bevorzugt ist der zu modifizierende Polyester demnach ein linear-aliphatischer hydroxylgruppenhaltiger Polyester, darunter bevorzugt ein gesättigter Polyester. Der zu modifizierende Polyester ist ganz besonders bevorzugt ein Polycaprolactonpolymer.

Der Polyester, insbesondere der linear-aliphatische und gesättigte Polyester mit mindestens einer Hydroxylgruppe, besonders bevorzugt das Polycaprolactonpolymer, ist Polyisocyanat-modifiziert und hat einen Isocyanatgehalt von 4 bis 15 %.

Dies bedeutet, dass der wie oben beschriebene Polyester mit einem Polyisocyanat modifiziert ist, das heißt unter Ausbildung kovalenter Bindungen umgesetzt wird, wobei nach der Reaktion jedoch jedenfalls freie Isocyanatgruppen übrig bleiben. Insbesondere bevorzugt wird ein Diisocyanat zur Modifizierung eingesetzt. Augenscheinlich muss der Polyester also mit Isocyanatgruppen reaktive funktionelle Gruppen enthalten, beispielsweise Hydroxylgruppen- oder Aminogruppen. Aus oben Gesagten folgt, dass es sich dabei bevorzugt um Hydroxylgruppen handelt. Nach der Umsetzung ist dann das Polyisocyanat über eine Urethangruppe mit dem Polyester verknüpft. Die entsprechenden Reaktionen und Reaktionsbedingungen sind grundsätzlich bekannt. Als zur Modifizierung einzusetzende Polyisocyanate können die an sich bekannten Verbindungen wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten sowie auf die an sich bekannten Dimere und/oder Trimere der genannten Polyisocyanate, das heißt also beispielsweise Uretdione und Isocyanurate der oben genannten Polyisocyanate, verwiesen. Bevorzugt werden aliphatische Polyisocyanate, insbesondere aliphatische Diisocyanate, eingesetzt. Insbesondere bevorzugt werden keine aromatischen Polyisocyanate eingesetzt. Ein besonders bevorzugtes Polyisocyanat ist Hexamethylendiisocyanat (HDI).

Der Polyisocyanat-modifizierte Polyester besitzt einen Isocyanatgehalt von 4 bis 15 %, bevorzugt 5 bis 12 %, insbesondere bevorzugt 6 bis 10 %. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Das gewichtsmittlere Molekulargewicht der Komponente (C) liegt beispielsweise im Bereich von 500 bis 10000 g/mol wie insbesondere 1000 bis 4000 g/mol. Entsprechende Produkte sind im Handel, beispielsweise in lösemittelfreier Form oder als Lösung in an sich bekannten und weiter unten beschriebenen Lösemitteln, erhältlich und können ohne weiteres in der Härterkomponente der erfindungsgemäßen Beschichtungszusammensetzung eingesetzt werden. Beispielhaft sei auf Produkte der Handelsbezeichnung Desmodur (Fa. Bayer) oder Adiprene LFH (Fa. Chemtura) verwiesen.

Der Anteil des mindestens einen Polyisocyanat-modifizierten Polyesters (C) liegt vorzugsweise im Bereich von 5 bis 25 Gew.-%, bevorzugt 6 bis 20 Gew.-%, besonders bevorzugt 7 bis 15 Gew.-%, jeweils bezogen auf das Gesamtgewicht der erfindungsgemäßen Beschichtungszusammensetzung.

Die erfindungsgemäße Beschichtungszusammensetzung ist wässrig und enthält demnach jedenfalls Wasser (zur Definition von wässrig siehe oben). Demzufolge enthält die Beschichtungszusammensetzung bevorzugt mindestens 10 Gew.-% Wasser, bevorzugt mindestens 15 Gew.-% Wasser, ganz besonders bevorzugt mindestens 20 Gew.-% Wasser, jeweils bezogen auf das Gesamtgewicht. Darunter bevorzugt sind die Bereiche 10 bis 40 Gew.-%, bevorzugt 15 bis 35 Gew.-%, insbesondere 20 bis 30 Gew.-%.

Als weitere Bestandteile kann die erfindungsgemäße Beschichtungszusammensetzung unterschiedliche dem Fachmann auf dem Gebiet bekannte Lackkomponenten enthalten.

Die Beschichtungszusammensetzung kann, auch wenn sie wässrig ist, organische Lösemittel enthalten. Organische Lösemittel sind dem Fachmann bekannt. Beispielhaft seien aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat, Methoxypropylacetat oder Ethylethoxypropionat, Ether, Alkohole, Chlorkohlenwasserstoffe oder Mischungen aus den vorgenannten Lösemitteln genannt. Der Anteil der organischen Lösemittel ist aber selbstverständlich wegen des wässrigen Charakters der erfindungsgemäßen Zusammensetzung begrenzt (zur Definition siehe oben). Demzufolge enthält die Beschichtungszusammensetzung bevorzugt weniger als 20 Gew.-% organische Lösemittel, bevorzugt weniger als 15 Gew.-% organische Lösemittel, jeweils bezogen auf das Gesamtgewicht. Darunter bevorzugt sind die Bereiche 5 bis kleiner 20 Gew.-%, insbesondere 5 bis kleiner 15 Gew.-%.

Die erfindungsgemäße Beschichtungszusammensetzung kann neben dem mindestens einen Polyisocyanat-modifizierten Polyester (C) mit einem Isocyanatgehalt von 4 bis 15 % noch mindestens eine weitere, davon verschiedene Polyisocyanatgruppen enthaltende Komponente enthalten. Bevorzugt ist allerdings, dass die Komponente (C) in einem Anteil von mindestens 30 Gew.-%, insbesondere bevorzugt 40 bis 70 Gew-%, bezogen auf die Gesamtmenge der in der Beschichtungszusammensetzung enthaltende Polyisocyanatgruppen enthaltenen Komponenten, eingesetzt wird.

Als weitere Polyisocyanatgruppen enthaltende Komponenten können die an sich bekannten Polyisocyanate wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten verwiesen. Bevorzugt werden dabei die an sich bekannten Dimere und/oder Trimeren der genannten Polyisocyanate eingesetzt, das heißt also insbesondere die an sich bekannten und auch im Handel erhältlichen Uretdione und Isocyanurate der oben genannten Polyisocyanate. Bevorzugt werden aliphatische Polyisocyanate eingesetzt. Insbesondere bevorzugt werden aliphatische Polyisocyanate eingesetzt. Bevorzugte weitere Polyisocyanate sind Hexamethylendiisocyanat und Isophorondiisocyanat sowie Mischungen hiervon, insbesondere deren unterschiedliche Trimere und Dimere wie Isocyanurate und Uretdione. Die Isocyanatgruppen in diesen Komponenten können frei oder durch bekannte Blockierungsmittel blockiert sein. Bevorzugt sind die Isocyanatgruppen unblockiert (also frei). Dies gilt im Übrigen auch für die oben beschriebene erfindungswesentliche Komponente (C). Die Beschichtungszusammensetzung enthält also bevorzugt ausschließlich Polyisocyanatgruppen enthaltende Komponenten, welche unblockiert sind, wobei diese bevorzugt ausschließlich in der Härterkomponente eingesetzt werden. Die genannten Polyisocyanate sind im Handel erhältlich. Sofern vorhanden, werden die weiteren Polyisocyanate selbstverständlich bevorzugt in der Härterkomponente eingesetzt. Als Polyisocyanat wird eine Verbindung dann bezeichnet, wenn sie im Mittel mehr als eine Isocyanatgruppe pro Molekül enthält.

Schließlich können die erfindungsgemäßen Beschichtungsmittelzusammensetzungen auch noch weitere von den bereits beschriebenen Komponenten verschiedene Bestandteile enthalten. Diese Bestandteile umfassen hierbei beispielsweise typische Lackadditive wie Katalysatoren, Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe, Pigmente sowie weitere Füllstoffe oder Katalysatoren. Der Anteil solcher Bestandteile liegt in den hierfür gängigen Bereichen von beispielsweise 0,1 bis 30 Gew.-%, bezogen auf die Gesamtmenge der Beschichtungszusammensetzung. Bevorzugt ist beispielsweise, dass die Zusammensetzung zwischen 5 und 30 Gew.-% eines Pigments, insbesondere eine Farbpigments wie beispielsweise Titandioxid enthält.

Der Festkörpergehalt der Beschichtungszusammensetzungen kann je nach den Erfordernissen des Einzelfalls variieren. Vorzugsweise liegt der Festkörpergehalt der erfindungsgemäßen Beschichtungszusammensetzung aber bei mindestens 40 %, besonders bevorzugt bei 45 bis 80 % und ganz besonders bevorzugt bei 50 bis 75 %. Die Bestimmungsmethode für den Festkörpergehalt ist weiter oben angegeben. Diese Prüfmethode wird, sofern nicht anders angegeben ist, ebenfalls angewandt, um beispielsweise den Anteil verschiedener Komponenten beziehungsweise Bestandteile der Beschichtungszusammensetzung, beispielsweise eines polymeren Harzes einer wässrigen Dispersion (A), am Gesamtgewicht der Zusammensetzung festzulegen beziehungsweise vorzubestimmen. Es kann also der Festkörper einer Dispersion einer Komponente, welche der Zusammensetzung zugegeben werden soll, bestimmt werden.

Durch Berücksichtigung des Festkörpers der Dispersion und der in der Zusammensetzung eingesetzten Menge der Dispersion kann dann der Anteil der Komponente an der Gesamtkomposition ermittelt beziehungsweise festgelegt werden. Diese Bestimmungsmethode kann natürlich auch erfolgen, wenn beispielsweise ein Bestandteil kommerziell erworben wird und vom Vertreiber als lösemittel- oder wasserfrei bezeichnet wird. In diesem Fall wird der Festkörper des einzusetzenden Handelsprodukts beispielsweise annähernd 100 % betragen.

Der Vorteil der vorliegenden Erfindung beruht nicht unerheblich auf dem folgenden Prinzip. Durch den Einsatz mindestens einer wässrigen Dispersion (A) eines polymeren Harzes gelingt überraschenderweise die Überführung des wegen entsprechender Unverträglichkeiten an sich nicht für wässrige Systeme geschaffenen hydrophoben Polycarbonatdiols in ein wässriges System. Ohne an eine bestimmte Theorie gebunden sein zu wollen, wird davon ausgegangen, dass die wässrige Dispersion (A) beziehungsweise das darin enthaltene polymere Harz als Emulgator oder Träger des Polycarbonatdiols fungiert, wodurch die Herstellung einer stabilen wässrigen Stammlackkomponente gelingt. Durch den Einsatz eines Polycarbonatdiols in einer wässrigen Phase, welches dann mit mindestens einem Polyisocyanat-modifizierten Polyester (C) kombiniert wird, resultiert eine Beschichtungszusammensetzung, welche ein sehr gutes ökologisches Profil mit einer hervorragenden Erosionsbeständigkeit vereint.

Bevorzugt ist dabei, dass die Herstellung der Stammlackkomponente die folgenden Schritte umfasst. Es wird zunächst eine wässrige Dispersion (A) vorgelegt beziehungsweise bereitgestellt. Die wässrige Dispersion kann an sich bekannte Dispergiermittel, das heißt beispielsweise typische grenzflächenaktive Additive (Emulgatoren) enthalten und/oder der Dispersion können (weitere) Dispergiermittel hinzugefügt werden. Auch geringe Mengen organischer Lösemittel können zugegeben werden, um die dann folgende Emulgierung zu unterstützen. Möglich ist auch, dass der Dispersion weitere typische Additive wie beispielsweise Entschäumer zugegeben werden.

Anschließend erfolgt eine Emulgierung des Polycarbonatdiols in der wässrigen Dispersion (A). Wie eine solche Emulgierung im Einzelfall zu erfolgen hat, ist bekannt beziehungsweise kann gegebenenfalls durch einfache zielgerichtete Versuche ermittelt werden (vergleiche auch Beispiele). In der Regel erfolgt eine Emulgierung durch Einbringung von Energie in ein Mischsystem, wodurch die Tropfen der beiden Phasen (hier die wässrige Dispersion und das Polycarbonatdiol) verkleinert werden und damit sukzessive die Grenzfläche zwischen den beiden Phasen vergrößert wird. Die Überwindung der Grenzflächenspannung beziehungsweise die Schaffung einer vergrößerten Grenzfläche erfordert Energie. Diese Energie wird regelmäßig mechanisch insbesondere über Scherkräfte, eingebracht. Das Einbringen der Scherkräfte erfolgt dabei regelmäßig über das Rühren des Systems, beispielsweise in typischen Rühraggregaten wie einen Dissolver. Bei der Emulgierung wird das Polycarbonatdiol bevorzugt kontinuierlich in die gerührte wässrige Dispersion eingebracht. Typischerweise gelingt eine gute Emulgierung dann, wenn Rührgeschwindigkeit und Zulaufrate des Polycarbonatdiols so angepasst werden, dass selbst eine temporäre makroskopische Phasentrennung nicht erfolgt, sondern innerhalb des Systems über die gesamte Zulaufzeit eine ausschließlich mikroskopische Phasentrennung (Emulsion) vorliegt. Die Begriffe makro- und mikroskopisch stehen hier augenscheinlich für eine mit dem Auge sichtbare oder eben nicht sichtbare Phasentrennung. Auch wenn bei einer im Anschluss an die Emulgierung erfolgenden Lagerung eine gewisse Phasenseparation stattfinden kann, lässt sich das System problemlos wieder zur Emulsion aufrühren. Es wird davon ausgegangen, dass neben den gegebenenfalls zugegebenen typischen Dispergiermitteln (Lackadditiven) das in der wässrigen Dispersion (A) vorliegende polymere Harz eine emulgierende Wirkung aufweist, wodurch die Überführung des Polycarbonatdiols (B) in die wässrige Phase gelingt. Unter Überführung des Polycarbonatdiols in die wässrige Phase ist im Rahmen der vorliegenden Erfindung zu verstehen, dass eine Zusammensetzung erhalten wird, in der das Polycarbonatdiol emulgiert ist. Da typische Polycarbonatdiole bei Normalbedingungen, das heißt Normaldruck und Raumtemperatur (das heißt 10 bis 40°C) in der Regel flüssig sind, wird der Übersichtlichkeit halber der Begriff Emulgierung (Mischung zweier an sich nicht mischbaren Flüssigkeiten) gewählt. Ob allerdings grundsätzlich der Begriff Emulgierung oder Dispergierung (als Oberbegriff des Mischens zweier an sich nicht mischbaren Phasen) gewählt wird, ist selbstverständlich unerheblich.

Danach werden weitere Komponenten der Stammlackkomponente der Beschichtungszusammensetzung hinzugegeben, beispielsweise bereits oben genannte Pigmente und Additive oder auch weitere polymere Harze als Bindemittel, beispielsweise in Form von weiteren wässrigen Dispersionen (A). Dies erfolgt typischerweise ebenfalls unter Durchmischung mittels typischer Rühraggregate wie Dissolvern.

Bevorzugt ist, dass die vorgelegte wässrige Dispersion (A), in welche das mindestens eine Polycarbonatdiol (B) emulgiert wird, eine Sekundärdispersion ist. Auf diese Weise gelingt die Emulgierung des Polycarbonatdiols in die wässrige Stammlackkomponente besonders gut.

Solche Sekundärdispersionen sind bekannt; wie weiter oben beschrieben wird bei deren Herstellung das polymere Harz zunächst in organischen Lösemitteln hergestellt, bevor die Dispergierung in Wasser und das Entfernen der organischen Lösemittel erfolgt. Selbstverständlich können in der wässrigen Sekundärdispersion noch anteilig organische Lösemittel verbleiben. Die bei der Herstellung des polymeren Harzes eingesetzten Lösemittel können insbesondere ausgewählt sein aus mit Wasser zumindest anteilig mischbaren Lösemitteln wie Butylglykol, Butyldiglykol, Methoxypropanole, Isopropoxypropanole, 1-Butoxy-2-propanol und n-Propanol. Die so hergestellten Lösungen von polymeren Harzen in organischen Lösemitteln haben beispielsweise einen Festkörper von 60 bis 90 %. Die Überführung in die wässrige Phase erfolgt dann in der Regel durch die gleichzeitige oder aufeinanderfolgende Versetzung der Lösung mit schon weiter oben genannten Neutralisationsmitteln und Wasser. Da die polymeren Harze wie oben beschrieben bevorzugt potentiell anionische Gruppen wie Carbonsäuregruppen besitzen, sind bevorzugte Neutralisationsmittel Ammoniak und Amine wie Triethanolamin, Dimethylethanolamin, Trimethylamin und

Triethylamin. Zudem wird in der Regel ein signifikanter Anteil der organischen Lösemittel entfernt, beispielsweise azeotrop abdestilliert. Natürlich kann während der Herstellung auch die Zugabe von wie oben beschriebenen Dispergiermitteln erfolgen. Auf diese Weise erhält man stabile wässrige Dispersionen mit wie oben genannten Festkörpern. Bekanntermaßen haben die polymeren Harze in so hergestellten Dispersionen insbesondere im Vergleich zu Harzen in Primärdispersionen meist geringere Molekulargewichte. Beispielsweise haben polymere Harze in den Sekundärdispersionen zahlenmittlere Molekulargewichte im Bereich von 5000 bis 50000 g/mol. Die Bestimmung der zahlenmittleren Molekulargewichte erfolgt im Rahmen der vorliegenden Erfindung mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Eine ganz besonders bevorzugte wässrige Dispersion (A) zur Emulgierung des mindestens einen Polycarbonatdiols ist eine wässrige Sekundärdispersion mit einem Festkörper von 30 bis 50 % enthaltend ein Polyacrylatharz mit einer OH-Zahl von 90 bis 250 mg KOH/g, bevorzugt 140 bis 200 mg KOH/g und einer Säurezahl von 5 bis 25 mg KOH/g.

Die erfindungsgemäße Beschichtungszusammensetzung enthält vorzugsweise, bezogen auf ihr Gesamtgewicht, zwischen 3 und 15 Gew.-%, bevorzugt 4 bis 10 Gew.-%, an polymeren Harzen, bevorzugt Polyacrylatharzen, die aus wässrigen Sekundärdispersionen (A) stammen. Der Anteil von wässrigen Sekundärdispersionen (A), bezogen auf das Gesamtgewicht der Beschichtungszusammensetzung, beträgt bevorzugt zwischen 5 und 30 Gew.-%, bevorzugt 5 bis 20 Gew.-%.

Bevorzugt enthält die erfindungsgemäße Beschichtungszusammensetzung zudem eine wässrige Primärdispersion (A). Auch solche Primärdispersionen sind bekannt; wie weiter oben beschrieben wird bei deren Herstellung das polymere Harz direkt in der wässrigen Phase hergestellt, beispielsweise anhand einschlägiger Verfahren wie der Emulsionspolymerisation.

Bekanntermaßen haben die polymeren Harze in so hergestellten Dispersionen insbesondere im Vergleich zu den Harzen in Sekundärdispersionen meist höhere Molekulargewichte. Beispielsweise haben die polymeren Harze in den Primärdispersionen im Rahmen der vorliegenden Erfindung zahlenmittlere Molekulargewichte von mindestens 60000 g/mol, wie insbesondere mindestens 100000 g/mol, beispielsweise im Bereich von 100000 bis 1000000 g/mol.

Überraschenderweise hat sich im Rahmen der vorliegenden Erfindung gezeigt, dass sich durch den Einsatz einer solchen Primärdispersion selbst ohne den Zusatz an sich bekannter Mattierungsmittel eine Beschichtungszusammensetzung herstellen lässt, die einen hervorragenden Mattierungseffekt, welcher wie eingangs beschrieben sehr wichtig ist, aufweist. Auf diese Weise besitzt man bei der Herstellung der wässrigen Beschichtungszusammensetzung eine nochmals verbesserte Formulierungsfreiheit. Da nämlich durch den Einsatz der Primärdispersion, welche ein zur Filmbildung ohnehin notwendiges polymeres Harz als Bindemittel enthält, bereits einen Mattierungseffekt erreicht, kann man auf den Einsatz separater Mattierungsmittel verzichten.

Eine im Rahmen der vorliegenden Erfindung ganz besonders bevorzugte wässrige Primärdispersion (A) besitzt einen Festkörper von 30 bis 50 % und enthält ein Polyacrylatharz mit einer OH-Zahl von 60 bis 150 mg KOH/g, bevorzugt 80 bis 130 mg KOH/g.

Die erfindungsgemäße Beschichtungszusammensetzung enthält vorzugsweise, bezogen auf ihr Gesamtgewicht, zwischen 5 und 25 Gew.-%, bevorzugt 10 bis 20 Gew.-%, an polymeren Harzen, bevorzugt Polyacrylatharzen, die aus wässrigen Primärdispersionen (A) stammen. Der Anteil von wässrigen Primärdispersionen (A), bezogen auf das Gesamtgewicht der erfindungsgemäßen Beschichtungszusammensetzung, beträgt bevorzugt zwischen 15 und 50 Gew.-%, bevorzugt 20 bis 45 Gew.-%.

Bevorzugt ist, dass das Verhältnis der molaren Gesamtmenge von Hydroxylgruppen in der Stammlackkomponente zu der molaren Menge an Isocyanatgruppen in der Härterkomponente von 1,1:1,0 bis 1,0:1,5, besonders bevorzugt 1,0:1,0 bis 1,0:1,5 liegt. Besonders bevorzugt ist demnach, dass das Verhältnis der molaren Gesamtmenge von Hydroxylgruppen der Komponenten (A) und (B) in der Stammlackkomponente zu der molaren Menge an Isocyanatgruppen in der Härterkomponente den genannten Wert einnimmt.

Alle angegebenen bevorzugten Ausführungsformen sind für sich genommen und in Kombination mit allen weiteren bevorzugten Ausgestaltungen als bevorzugt anzusehen. Die bevorzugten Ausführungsformen gelten nicht nur für die erfindungsgemäße Beschichtungszusammensetzung, sondern auch für die in der Folge beschriebenen Gegenstände, beispielsweise ein Verfahren, in dem die Beschichtungszusammensetzung eingesetzt wird.

Die vorliegende Erfindung betrifft auch ein Verfahren zur Herstellung der erfindungsgemäßen Beschichtungszusammensetzung. Die Herstellung des kann unter Einsatz der üblichen und bekannten Mischverfahren und Mischaggregate wie Rührkesseln, Rührwerksmühlen, Extrudern oder Knetern erfolgen. Dabei ist zu beachten, dass es sich bei der erfindungsgemäßen Beschichtungszusammensetzung um eine Zweikomponenten-Zusammensetzung handelt und die Stammlackkomponente sowie die Härterkomponente getrennt voneinander hergestellt und gelagert werden und dann, wie oben beschrieben, erst kurz vor der Applikation des Grundierungsmittels zusammengegeben und gemischt werden. Die Stammlackkomponente enthält dabei in der Regel neben den erfindungswesentlichen Bestandteilen (A) und (B) die gegebenenfalls vorhandenen Zusatzstoffe beziehungsweise Lackadditive. Dieser Stammlackkomponente wird dann die Härterkomponente, welche neben dem erfindungswesentlichen Bestandteil (C) noch weitere Polyisocyanatgruppen enthaltende Verbindungen enthalten kann, kurz vor der Applikation der Beschichtungszusammensetzung auf ein Substrat beigemischt. Weiterhin ist bei der Herstellung der Beschichtungszusammensetzung zu beachten, dass die Stammlackkomponente (1) bevorzugt wie weiter oben beschrieben hergestellt wird, das heißt die Herstellung der Stammlackkomponente umfasst, in der angegebenen Reihenfolge, (i) die Bereitstellung einer wässrigen Dispersion (A), (ii) die Emulgierung des Polycarbonatdiols (B) in der wässrigen Dispersion (A) und (iii) das Hinzufügen weiterer Komponenten der Stammlackkomponente wie insbesondere Pigmente oder auch weiterer polymerer Harze als Bindemittel, beispielsweise einer (weiteren) wässrigen Primärdispersion eines polymeren Harzes, zur der unter (ii) erhaltenen Mischung.

Ein weiterer Gegenstand der vorliegenden Erfindung betrifft eine aus der erfindungsgemäßen Beschichtungszusammensetzung hergestellte Beschichtung sowie ein Verfahren zur Herstellung solcher Beschichtungen.

Das Verfahren zur Herstellung einer Beschichtung umfasst die Applikation der Beschichtungszusammensetzung auf ein Substrat. Die Applikation kann über die üblichen Verfahren wie Spritzen (beispielsweise. Airless, Airmix, Druckluft, Heißspritzverfahren oder Induktionsvermischung), Walzen, Rollen, Streichen oder über eine Kartusche erfolgen. Vorzugsweise wird die Beschichtungszusammensetzung durch Rollen oder Streichen aufgebracht.

Um eine gehärtete Beschichtung herzustellen, wird die aufgebrachte Beschichtungszusammensetzung nach der Applikation gehärtet. Vorzugsweise erfolgt die Härtung thermisch. Die applizierte Beschichtungszusammensetzung beziehungsweise die Beschichtung bestehend aus der Zusammensetzung wird dabei bevorzugt Temperaturen von nicht mehr als 80°C, bevorzugt nicht mehr als 60°C ausgesetzt. Besonders bevorzugt ist ein Temperaturbereich von 15 bis 60 °C, ganz besonders von 15 bis 50 °C.

Die Zeitdauer, die für eine vollständige Härtung benötigt wird, kann je nach gewählter Härtungstemperatur stark variieren und liegt beispielsweise im Bereich von 30 min bis 10 Tagen. Beispielsweise kann für eine Dauer von 30 min bei 40°C bis 60°C gehärtet werden oder aber bei nur 15 bis 25°C für eine Dauer von 10 Tagen gehärtet werden. Bei oder vor der Härtung können auch übliche thermische Härtungsvorrichtungen und/oder Konventionsverfahren angewandt werden, beispielsweise Durchlauföfen, NIR- und IR- Heizstrahler, Gebläse und Blastunnel. Diese Vorrichtungen können auch miteinander kombiniert werden. Dabei kann eine durch die Temperatur gesteuerte Härtung durch Konvektion unterstützt werden.

Die Beschichtungen können jeweils eine Trockenfilmschichtdicke von beispielsweise 50 bis 500 µm, vorzugsweise von 100 bis 400 µm aufweisen.

Die erfindungsgemäßen Beschichtungen können auf an sich beliebigen Substraten durch Applikation einer erfindungsgemäßen Beschichtungszusammensetzung auf das Substrat hergestellt werden. Die Substrate können aus den unterschiedlichsten Materialien und Kombinationen von Materialien aufgebaut sein. Vorzugsweise bestehen sie aus Metallen wie Stahl oder Aluminium sowie Kunststoffen wie epoxidharzbasierten Kunststoffen, die glasfaser- (GFK), aramidfaser- (AFK) und/oder kohlefaserverstärkt (CFK) oder beispielsweise mit Hanf oder Sisal naturfaserverstärkt sein können und/oder Glas. Bevorzugte Substrate sind glasfaserverstärkte Epoxidharz-Kunststoffe. Die Substrate können beliebige Größen und Formen aufweisen.

Von Vorteil ist aber, dass gerade sehr große Substrate wie beispielsweise Rotorblätter ohne besondere verfahrenstechnische Schwierigkeiten beschichtet werden können. Denn die erfindungsgemäße Beschichtungszusammensetzung kann bei vergleichsweise niedrigen Temperaturen gehärtet werden, sodass keine explizite Zuführung von Wärme, das heißt thermischer Energie, im Rahmen einer komplexen Anlagentechnik notwendig ist, um eine gehärtete Beschichtung herzustellen.

Aufgrund der sehr guten Erosionsbeständigkeit der Beschichtungen sind bevorzugte Substrate solche, die die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate. Hier wirkt sich insbesondere auch die Tatsache aus, dass die Beschichtungen zudem einen sehr guten Mattierungseffekt aufweisen können.

Aus oben Gesagten folgt, das auch ein Substrat, das mit einer erfindungsgemäßen Beschichtung beschichtet ist, Gegenstand der vorliegenden Erfindung ist. Genauso folgt aus oben Gesagten, dass auch die Verwendung der erfindungsgemäßen Beschichtungszusammensetzung sowie die Verwendung einer erfindungsgemäßen Beschichtung zur Verbesserung der Erosionsbeständigkeit von Substraten, insbesondere den oben genannten Substraten, Gegenstand der vorliegenden Erfindung sind. Ebenfalls folgt aus oben Gesagtem, dass die Verwendung einer erfindungsgemäßen Beschichtungszusammensetzung, welche eine wässrige Primärdispersion (A) eines polymeren Harzes enthält, bevorzugt sowohl eine Sekundärdispersion und eine Primärdispersion (A), sowie die Verwendung einer daraus hergestellten Beschichtung auf Substraten zur Mattierung von Substratoberflächen Gegenstand der vorliegenden Erfindung ist.

Möglich ist auch, dass unter Einsatz einer erfindungsgemäßen Beschichtungszusammensetzung eine Mehrschichtbeschichtung hergestellt wird. Auch eine solche Mehrschichtbeschichtung ist Gegenstand der vorliegenden Erfindung. Die aus der Beschichtungszusammensetzung hergestellte Beschichtung ist also in einer Mehrschichtbeschichtung enthalten. Bevorzugt sind Mehrschichtbeschichtungen, in denen eine erfindungsgemäße Beschichtung die Deckbeschichtung darstellt. Auf diese Weise wird ein technischer Effekt der erfindungsgemäßen Beschichtung, nämlich die hervorragende Erosionsbeständigkeit, optimal ausgenutzt. Dies bedeutet, dass alle weiteren Beschichtungsschichten unterhalb der erfindungsgemäßen Beschichtung und damit zwischen dem Substrat und der erfindungsgemäßen Beschichtung angeordnet sind. Ein Substrat, das mit einer erfindungsgemäßen Beschichtung beschichtet ist, muss also nicht in direktem Kontakt mit dieser Beschichtung stehen. Dazwischen können weitere Schichten, beispielsweise zumindest eine an sich bekannte Füllerschicht, angeordnet sein.
Die erfindungsgemäße Beschichtungszusammensetzung eignet sich insbesondere zur Beschichtung von Ecken und Kanten, insbesondere Kanten, von Substraten. Die Verwendung der erfindungsgemäßen Beschichtungszusammensetzung sowie die Verwendung einer erfindungsgemäßen Beschichtung zur Verbesserung des Kantenschutzes ist also auch Gegenstand der vorliegenden Erfindung. Gerade Kanten von Substraten, beispielsweise den oben genannten Substraten, sind im Gebrauch erodierenden Einflüssen besonders stark ausgesetzt.

Obwohl eine erfindungsgemäße wässrige Beschichtungszusammensetzung einen völlig anderen Charakter hat, als die bekannten Zusammensetzungen enthaltend organische Lösemittel oder die bekannten lösemittelfreien Zusammensetzungen, werden Beschichtungen erhalten, die eine ausgezeichnete Erosionsbeständigkeit aufweisen. Zudem besteht die schon eingangs erläuterte gute Formulierungsfreiheit.

In der Folge wird die vorliegende Erfindung anhand von Beispielen erläutert.

### Beispiele

### 1. Prüfmethoden

### 1.1 Allgemeines

Zur labortechnischen Bestimmung der Erosionsbeständigkeit können generell unterschiedliche Gerätschaften verwendet werden, bei denen entweder das zu erodierende beschichtete Substrat durch das Erosionsmedium bewegt wird oder das Substrat feststeht und vom Erosionsmedium umströmt wird. Ein feststehender Prüfkörper kann beispielsweise durch eine Hochdruck-Wasserstrahl-Technik, welche beispielsweise. beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das zu erodierende beschichtete Substrat an einem Rotor oder einer Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches beispielsweise im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden. Den genannten Prüfmöglichkeiten ist gemein, dass reale Geschwindigkeiten, wie beispielsweise Umfangsgeschwindigkeiten von Rotorblättern oder Reisefluggeschwindigkeiten von Flugzeugen simuliert werden und die Schadensbilder den real auftretenden Schadensbildern ähnlich sind.

Die Prüfung des Mattierungseffekts beziehungsweise des Mattierungsgrads kann an hergestellten Beschichtungen über die Messung des Glanzes der Beschichtung erfolgen. Ein niedriger Glanzwert entspricht dann einem guten Mattierungsgrad. Beispielsweise können typische Glanzmessungen im 60° Winkel nach DIN EN 13523-2 erfolgen. In der Fachwelt wird typischerweise ein Glanzgrad von kleiner 15 Einheiten bei einem 60° Winkel als matt bezeichnet.

### 1.2 Testbedingungen

Im Rahmen der Beispiele erfolgte die Prüfung der Regenerosionsbeständigkeit nach der Norm ASTM G 73. Die Tests wurden auf einem hauseigenen Regenerosions-Prüfstand durchgeführt. Die Prüfkörper werden in bestimmten Zeitabständen (15 Minuten) bei definierter Geschwindigkeit (140 m/s) durch einen Tropfenvorhang geschleudert. Die Regenmenge wird dabei durch die angelegte Durchflussrate ebenfalls konstant gehalten (30 l/h). Die Tropfengrößen des angelegten "Regens" betragen dabei durchschnittlich 5-6 mm. Die Prüfungen erfolgen bei einer Temperatur von 20 bis 25 °C. Die Auswertung erfolgt visuell. Die Erosionsbeständigkeit entspricht der Zeit bis zum ersten Durchscheinen des Substrates.

Der Mattierungsgrad beziehungsweise der Glanz wird nach DIN EN 13523-2 bestimmt. Die Bestimmung erfolgt mit einem Glanzgradmessgerät MICRO TRI-GLOSS der Firma BYK-Gardner. Vor jeder Messung wird das Gerät mit den eingebauten Kalibrierstandards kalibriert. Für die Prüfung wird die Winkeleinstellung von 60° am Gerät ausgewählt. Es werden 5 Messungen in Längsrichtung (Aufziehrichtung bzw. Applikationsrichtung) durchgeführt, in dem das Gerät planar auf die Oberfläche gelegt und der Messwert abgelesen wird. Aus 5 Messwerten wird ein Mittelwert errechnet und im Prüfprotokoll vermerkt. Die Beurteilung erfolgt durch Bestimmung des Glanzwerts (GU) zwischen 0 und 100. Niedrige Werte entsprechen einem hohen Mattierungseffekt.

### 2. Herstellung von Beschichtungszusammensetzungen und gehärteten Beschichtungen

Die Stammlackkomponente und Härterkomponente von wässrigen Beschichtungszusammensetzungen wurden durch Zusammengeben der jeweiligen Bestandteile in der angegebenen Reihenfolge und fortwährendes inniges Vermischung einem Dissolver hergestellt (Tabelle 1). Bei den Beschichtungszusammensetzungen enthaltend ein Polycarbonatdiol (B) wurde dabei wie folgt vorgegangen. Zunächst wurde die jeweils in der Tabelle 1 angegebene Sekundärdispersion (A) vorgelegt und unter Rühren mit handelsüblichen Dispergieradditiven sowie Butoxyl versetzt. Ebenfalls hinzugefügt wurde ein handelsüblicher Entschäumer, um bei der anschließenden Emulgierung eine zu intensive Schaumentwicklung zu unterbinden. Anschließend erfolgt eine Emulgierung des Polycarbonatdiols (B) in der wässrigen Dispersion (A). Dabei wurde das Polycarbonatdiol, bezogen auf einen 25 Kilogramm-Ansatz Stammlack, innerhalb von 10 Minuten kontinuierlich zugegeben. Während der Zugabe wurde das System gleichmäßig gerührt (Dissolver, Typ Disperlux 075, Fa. Pendraulik, Leistung 0,75 kW, Durchmesser Dissolverscheibe 12,50 cm, UpM (Umdrehungen pro Minute) 1500). Bei dieser Rührgeschwindigkeit ergab sich ein kontinuierlicher Emulgierungsprozess ohne makroskopische Phasentrennung. Nach Beendigung der Zugabe des Polycarbonatdiols wurden zunächst Wasser und Titandioxid beigemischt und anschließend wie in Tabelle 1 angegeben komplettiert.

**Tabelle 1**

| **Bestandteil** | **Gewichtsteile** | | | |
|---|---|---|---|---|
| | **V1** | **V2** | **V3** | **E1** |
| **Stammlackkomponente** | | | | |
| | | | | |
| Wässrige Sekundärdispersionen eines polymeren Harzes (A) (Festkörper 41 %, OH-Zahl 165, Säurezahl 10) | 67,75 | 25.0 | 25.0 | 14,4 |
| Dispergieradditive | 1,00 | 1,0 | 1,0 | 1,6 |
| Butoxyl | | | | 1,2 |
| Entschäumer | 1,0 | 1,0 | 1,0 | 0,5 |
| Lineares, aliphatisches Polycarbonatdiol (B) mit endständigen Hydroxylgruppen, lösemittelfrei | - | - | - | 6,8 |
| Wasser | 1,5 | 1,5 | 1,5 | 0,92 |
| Pigment Titandioxid | 20,0 | 20,0 | 20,0 | 23,8 |
| | | | | |
| *Komplettierung mit* | | | | |
| | | | | |
| Wasser | 5,5 | 4,0 | 4,0 | 6,9 |
| Additivmischung | 2,5 | 5,5 | 5,5 | 4,1 |
| Butoxyl/Texanol | 1,25 | 2.0 | 2.0 | 3,3 |
| Wässrige Primärdispersionen eines Polyacrylatharzes (A), Festkörper 45 %, OH-Zahl 105 | - | 40.0 | 40.0 | 36,5 |
| | | | | |
| **Summe** | **100** | **100** | **100** | **100** |
| | | | | |
| **Härterkomponente** | | | | |
| Aliphatischer HDI-modifizierter Polyester (C) mit einem Isocyanatgehalt von 8,4 % | - | - | 40,0 | 40,0 |
| HDI-Trimerisat | 80,0 | 80,0 | 48,0 | 48,0 |
| Butoxyl | 20,0 | 20,0 | 12,0 | 12,0 |
| | | | | |
| **Summe** | **100** | **100** | **100** | **100** |

| | | | | |
|---|---|---|---|---|
| V = Vergleichszusammensetzung E = Erfindungsgemäße Zusammensetzung | | | | |

Anschließend wurden 3,25 Teile der Stammlackkomponente mit 1 Teil der Härterkomponente homogen vermischt und direkt auf einen mit einem handelsüblichen polyharnstoffbasierten Porenfüller vorbeschichteten Epoxidharz-Prüfkörper appliziert (Streichapplikation). Die Härtung erfolgte durch Lagerung über einen Zeitraum von sieben Tagen bei 20 bis 25°C. Die Trockenschichtdicke betrug 120 Mikrometer.

Anschließend wurden die auf dem Substrat angeordneten Mehrschichtbeschichtungen hinsichtlich der Regenerosionsbeständigkeit und des Mattierungsgrads untersucht (Tabelle 2).

**Tabelle 2**

| | **V1** | **V2** | **V3** | **E1** |
|---|---|---|---|---|
| **Dauer Regenerosionstest** (in Minuten) | 30 | 30 | 45 | 240 |
| **Glanzgrad** | 80 | 12 | 24 | 10 |

Die Ergebnisse zeigen, dass die anhand der neuen wässrigen Beschichtungszusammensetzung hergestellten Beschichtungen eine hervorragende Erosionsbeständigkeit aufweisen. Die Beständigkeit ist zudem deutlich besser als die Erosionsbeständigkeit von Beschichtungen, die mithilfe von wässrigen Zusammensetzungen hergestellt wurden, die nicht die erfindungsgemäße Kombination von Polycarbonatdiol (B) und der Isocyanatgruppen haltigen Verbindung (C) umfassen. Ein weiterer Vergleich mit Beschichtungen, die mithilfe von Zusammensetzungen enthaltend organische Lösemittel beziehungsweise lösemittelfreien Zusammensetzungen hergestellt wurden, ergibt, dass die erfindungsgemäßen Beschichtungen sogar noch beständiger sind. Beispielhaft sei auf die Beispiele 1 und 2 der DE 10 2010 044 935 A1 verwiesen, die eine Regenerosionsbeständigkeit von 180 Minuten und 160 Minuten aufweisen, wobei im Stand der Technik sogar eine wesentlich höhere Schichtdicke der Decklackschicht von 300 Mikrometern realisiert wurde.

Gleichzeitig wurde gezeigt, dass die erfindungsgemäßen Beschichtungszusammensetzungen ohne den Zusatz von separaten Mattierungsmitteln durch den Einsatz einer Primärdispersion (A) zu Beschichtungen führen, die einen sehr hohen Mattierungsgrad aufweisen.
Die erfindungsgemäßen Beschichtungszusammensetzungen vereinen demnach in hervorragender Weise wichtige anwendungstechnische Eigenschaften, nämlich eine gute Erosionsbeständigkeit, mit einem durch den wässrigen Charakter der Zusammensetzung zum Ausdruck kommenden hochwertigen ökologischen Profil. Gleichzeitig lässt sich der Mattierungsgrad ohne den Einsatz handelsüblicher Mattierungsmittel erreichen. Durch den Einsatz einer wässrigen Primärdispersion (A), welche ein zur Filmbildung ohnehin notwendiges polymeres Harz als Bindemittel enthält, wird bereits ein Mattierungseffekt erreicht, sodass man auf den Einsatz separater Mattierungsmittel verzichten kann. Die ohnehin bereits durch die Konditionierung der Beschichtungszusammensetzung als wässrige (und nicht lösemittelfreie) Zusammensetzung verbesserte Formulierungsfreiheit wird hierdurch nochmals erhöht.

## Patentansprüche

1. Wässrige Zweikomponenten-Beschichtungszusammensetzung, umfassend
(1) eine wässrige Stammlackkomponente umfassend
(A) mindestens eine wässrige Dispersion mindestens eines polymeren Harzes und
(B) mindestens ein Polycarbonatdiol
sowie
(2) eine Härterkomponente umfassend
(C) mindestens einen Polyisocyanat-modifizierten Polyester mit einem Isocyanatgehalt von 4 bis 15 %.

2. Wässrige Zweikomponenten-Beschichtungszusammensetzung nach Anspruch 1, **dadurch gekennzeichnet, dass** die Stammlackkomponente (1) mindestens eine wässrige Dispersion (A) enthält, die mindestens ein hydroxyfunktionelles polymeres Harz umfasst.

3. Wässrige Zweikomponenten-Beschichtungszusammensetzung nach Anspruch 2, **dadurch gekennzeichnet, dass** das hydroxyfunktionelle polymere Harz zudem carboxyfunktionell ist.

4. Wässrige Zweikomponenten-Beschichtungszusammensetzung nach Anspruch 2 oder 3, **dadurch gekennzeichnet, dass** das hydroxyfunktionelle polymere Harz ein Polyacrylatharz ist.

5. Wässrige Zweikomponenten-Beschichtungszusammensetzung nach einem der Ansprüche 1 bis 4, **dadurch gekennzeichnet, dass** der Polyisocyanat-modifizierte Polyester (C) ein Hexamethylendiisocyanat-modifizierter Polyester ist.

6. Wässrige Zweikomponenten-Beschichtungszusammensetzung nach einem der Ansprüche 1 bis 5, **dadurch gekennzeichnet, dass** der modifizierte Polyester (C) durch Umsetzung von Hexamethylendiisocyanat mit einem hydroxyfunktionellen aliphatischen Polyester herstellbar ist.

7. Wässrige Zweikomponenten-Beschichtungszusammensetzung nach Anspruch 6, **dadurch gekennzeichnet, dass** der für die Umsetzung eingesetzte hydroxyfunktionelle aliphatische Polyester ein Polycaprolactonpolymer ist.

8. Wässrige Zweikomponenten-Beschichtungszusammensetzung nach einem der Ansprüche 1 bis 7, **dadurch gekennzeichnet, dass** die Härterkomponente (2) zudem eine von dem Polyester (C) verschiedene Polyisocyanatgruppen enthaltende Komponente enthält und der Anteil des Polyesters (C) in der Härterkomponente, bezogen auf die Gesamtmenge von in der Beschichtungszusammensetzung enthaltenden Polyisocyanatgruppen enthaltenden Komponenten, von 40 bis 70 Gew.-% liegt.

9. Wässrige Zweikomponenten-Beschichtungszusammensetzung nach einem der Ansprüche 1 bis 8, **dadurch gekennzeichnet, dass** die Stammlackkomponente (1) mindestens zwei wässrige Dispersionen (A) enthält, wobei mindestens eine Dispersion (A) eine Sekundärdispersion und mindestens eine Dispersion (A) eine Primärdispersion ist.

10. Wässrige Zweikomponenten-Beschichtungszusammensetzung nach Anspruch 9, **dadurch gekennzeichnet, dass** mindestens eine Sekundärdispersion (A) und mindestens eine Primärdispersion (A) ein hydroxyfunktionelles Polyacrylatharz als polymeres Harz enthalten.

11. Wässrige Zweikomponenten-Beschichtungszusammensetzung nach einem der Ansprüche 1 bis 10, **dadurch gekennzeichnet, dass** die Herstellung der Stammlackkomponente (1), in der angegebenen Reihenfolge, die folgenden Schritte umfasst: (i) Bereitstellung einer wässrigen Dispersion (A), (ii) Emulgierung eines Polycarbonatdiols (B) in der wässrigen Dispersion (A) und (iii) Hinzufügen weiterer Komponenten der Stammlackkomponente zu der unter (ii) erhaltenen Mischung.

12. Verfahren zur Herstellung einer Beschichtung auf einem Substrat umfassend die Applikation einer Beschichtungszusammensetzung gemäß einem der Ansprüche 1 bis 11 auf ein Substrat und die anschließende Härtung der applizierten Zusammensetzung.

13. Beschichtung, herstellbar nach einem Verfahren gemäß Anspruch 12.

14. Mehrschichtbeschichtung, die eine Beschichtung nach Anspruch 13 als Deckbeschichtung umfasst.

15. Verwendung einer Beschichtung gemäß Anspruch 13 oder Mehrschichtbeschichtung gemäß Anspruch 14 zur Verbesserung der Erosionsbeständigkeit von Substraten.

## Claims

1. An aqueous two-component coating composition comprising
(1) an aqueous paint base component comprising
(A) at least one aqueous dispersion of at least one polymeric resin
and
(B) at least one polycarbonate diol
and
(2) a hardener component comprising
(C) at least one polyisocyanate-modified polyester having an isocyanate content of 4% to 15%.

2. The aqueous two-component coating composition as claimed in claim 1, wherein the paint base component (1) comprises at least one aqueous dispersion (A) which comprises at least one hydroxy-functional polymeric resin.

3. The aqueous two-component coating composition as claimed in claim 2, wherein the hydroxy-functional polymeric resin is also carboxy-functional.

4. The aqueous two-component coating composition as claimed in claim 2 or 3, wherein the hydroxy-functional polymeric resin is a polyacrylate resin.

5. The aqueous two-component coating composition as claimed in any of claims 1 to 4, wherein the polyisocyanate-modified polyester (C) is a hexamethylene diisocyanate-modified polyester.

6. The aqueous two-component coating composition as claimed in any of claims 1 to 5, wherein the modified polyester (C) is preparable by reaction of hexamethylene diisocyanate with a hydroxy-functional aliphatic polyester.

7. The aqueous two-component coating composition as claimed in claim 6, wherein the hydroxy-functional aliphatic polyester used for the reaction is a polycaprolactone polymer.

8. The aqueous two-component coating composition as claimed in any of claims 1 to 7, wherein the hardener component (2) further comprises a component which is different from the polyester (C) and comprises polyisocyanate groups, and the fraction of the polyester (C) in the hardener component, based on the total amount of components present in the coating composition and comprising polyisocyanate groups, is from 40 to 70 wt%.

9. The aqueous two-component coating composition as claimed in any of claims 1 to 8, wherein the paint base component (1) comprises at least two aqueous dispersions (A), at least one dispersion (A) being a secondary dispersion and at least one dispersion (A) being a primary dispersion.

10. The aqueous two-component coating composition as claimed in claim 9, wherein at least one secondary dispersion (A) and at least one primary dispersion (A) comprise a hydroxy-functional polyacrylate resin as polymeric resin.

11. The aqueous two-component coating composition as claimed in any of claims 1 to 10, wherein the preparation of the paint base component (1) encompasses the following steps in the order stated: (i) provision of an aqueous dispersion (A), (ii) emulsification of a polycarbonate diol (B) in the aqueous dispersion (A), and (iii) addition of further components of the paint base component to the mixture obtained in (ii).

12. A method for producing a coating on a substrate, comprising the application of a coating composition as claimed in any of claims 1 to 11 to a substrate and the subsequent curing of the applied composition.

13. A coating producible by a method as claimed in claim 12.

14. A multicoat coating which comprises as topcoat a coating as claimed in claim 13.

15. The use of a coating as claimed in claim 13 or multicoat coating as claimed in claim 14 for improving the erosion resistance of substrates.

## Revendications

1. Composition de revêtement bicomposant à base aqueuse, comprenant
(1) un composant de laque de base à base aqueuse comprenant
(A) au moins une dispersion aqueuse d'au moins une résine polymère et
(B) au moins un diol de polycarbonate
et
(2) un composant durcisseur comprenant
(C) au moins un polyester modifié par un polyisocyanate avec une teneur en isocyanate de 4 à 15 %.

2. Composition de revêtement bicomposant à base aqueuse selon la revendication 1, **caractérisée en ce que** le composant de laque de base (1) contient au moins une dispersion aqueuse (A), qui comprend au moins une résine polymère à fonction hydroxy.

3. Composition de revêtement bicomposant à base aqueuse selon la revendication 2, **caractérisée en ce que** la résine polymère à fonction hydroxy est en plus à fonction carboxy.

4. Composition de revêtement bicomposant à base aqueuse selon la revendication 2 ou 3, **caractérisée en ce que** la résine polymère à fonction hydroxy est une résine polyacrylate.

5. Composition de revêtement bicomposant à base aqueuse selon l'une des revendications 1 à 4, **caractérisée en ce que** le polyester (C) modifié par le polyisocyanate est un polyester modifié par un hexaméthylène diisocyanate.

6. Composition de revêtement bicomposant à base aqueuse selon l'une des revendications 1 à 5, **caractérisée en ce que** le polyester (C) modifié peut être fabriqué par conversion de l'hexaméthylène diisocyanate avec un polyester aliphatique à fonction hydroxy.

7. Composition de revêtement bicomposant à base aqueuse selon la revendication 6, **caractérisée en ce que** le polyester aliphatique à fonction hydroxy mis en oeuvre pour la conversion est un polymère de polycaprolactone.

8. Composition de revêtement bicomposant à base aqueuse selon l'une des revendications 1 à 7, **caractérisée en ce que** le composant durcisseur (2) contient en plus un composant contenant des groupes polyisocyanate différents du polyester (C) et la proportion du polyester (C) dans le composant durcisseur, par rapport à la quantité totale des composants contenant des groupes polyisocyanate contenus dans la composition de revêtement, est de 40 à 70 % en poids.

9. Composition de revêtement bicomposant à base aqueuse selon l'une des revendications 1 à 8, **caractérisée en ce que** le composant de laque de base (1) contient au moins deux dispersions aqueuses (A), dans laquelle au moins une dispersion (A) est une dispersion secondaire et au moins une dispersion (A) est une dispersion primaire.

10. Composition de revêtement bicomposant à base aqueuse selon la revendication 9, **caractérisée en ce qu'**au moins une dispersion secondaire (A) et au moins une dispersion primaire (A) contiennent une résine polyacrylate à fonction hydroxy en tant que résine polymère.

11. Composition de revêtement bicomposant à base aqueuse selon l'une des revendications 1 à 10, **caractérisée en ce que** la fabrication du composant de laque de base (1), dans l'ordre indiqué, comprend les étapes suivantes : (i) fourniture d'une dispersion aqueuse (A), (ii) émulsion d'un diol de polycarbonate (B) dans la dispersion aqueuse (A) et (iii) addition d'autres composants du composant de laque de base au mélange obtenu au (ii).

12. Procédé de fabrication d'un revêtement sur un substrat comprenant l'application d'une composition de revêtement selon l'une des revendications 1 à 11 sur un substrat et le durcissement consécutif de la composition appliquée.

13. Revêtement pouvant être fabriqué selon un procédé selon la revendication 12.

14. Revêtement multicouche qui comprend un revêtement selon la revendication 13 en tant que couche de finition.

15. Utilisation d'un revêtement selon la revendication 13 ou revêtement multicouche selon la revendication 14 pour améliorer la résistance à l'érosion de substrats.
